# DEMANDE DE BREVET EUROPEEN

(11) **EP 4 195 370 A1**
(43) Date de publication de la demande: **14.06.2023**
(21) Numéro de dépôt: 22212026.3
(22) Date de dépôt: 07.12.2022
(51) Int. Cl.: H01M 10/6569, H01M 10/613, H01M 10/625, H01M 50/204, H01M 50/249, H01M 50/289, H01M 50/502

(54) **MODULE POUR BATTERIE COMPRENANT UNE MEMBRANE**

(30) Priorité: 08.12.2021 FR 2113127
(71) Demandeur: Renault s.a.s, 92100 Boulogne Billancourt (FR)
(72) Inventeur: Fiard, Jean Michel, 78084 GUYANCOURT CEDEX (FR); Yu, Robert, 78084 GUYANCOURT CEDEX (FR)

(57) **Abrégé**

L'invention porte sur un module (51) pour une batterie comprenant une enceinte (10), l'enceinte (10) comprenant une première paroi (11) et une deuxième paroi (12), des cellules (2) comprenant une première face et une deuxième face, des premiers connecteurs (26) destinés à connecter électriquement des cellules (2) entre elles du côté de la première face, un matériau (7) apte à passer d'une phase liquide à une phase vapeur et vice versa, une première membrane hermétique (20) renfermant un gaz, la première membrane (20) s'étendant entre la première paroi (11) de l'enceinte (10) et les premières faces des cellules (2), les premiers connecteurs (26) s'étendant en vis-à-vis de premières faces de cellules (2) de sorte à ce que les premiers connecteurs (26) viennent au contact de la première membrane (20).

## Description

### Domaine technique de l'invention

L'invention concerne un module pour batterie. L'invention porte encore sur une batterie comprenant un tel module. L'invention porte encore sur un véhicule comprenant un tel module ou une telle batterie. L'invention porte enfin sur un procédé d'assemblage d'un tel module.

### Etat de la technique antérieure

Un véhicule électrique ou hybride, par exemple un véhicule automobile, comprend une batterie. Une telle batterie, par exemple de traction et/ou de propulsion, comprend généralement un ou plusieurs modules. De tels modules comprennent chacun plusieurs cellules électrochimiques de stockage de l'énergie électrique. De telles cellules ont besoin d'être refroidies pour maximiser leurs performances, en particulier en termes d'autonomie et de rapidité de recharge.

Dans la demande WO202049249, des cellules d'un module de batterie sont immergées dans un fluide diélectrique à changement de phases afin d'assurer leur refroidissement. Un ballon déformable au sein du module est relié à un orifice de mise à la pression atmosphérique de sorte à assurer une régulation de pression au sein du module.

Une telle solution est particulièrement encombrante. Or, généralement, une batterie est agencée au niveau du plancher d'un véhicule qui dispose d'un espace restreint.

Ainsi, il convient de diminuer les dimensions de chaque module de sorte à pouvoir réduire l'encombrement de la batterie et/ou augmenter le nombre de modules composant une batterie ayant un encombrement donné et/ou augmenter les performances d'une batterie ayant un encombrement donné.

### Présentation de l'invention

Le but de l'invention est de fournir un module remédiant aux inconvénients ci-dessus. En particulier, l'invention propose un module facile à assembler.

### Résumé de l'invention

Pour atteindre cet objectif, l'invention porte sur un module pour une batterie, le module comprenant :
- une enceinte, l'enceinte comprenant une première paroi et une deuxième paroi, les première et deuxième parois étant opposées et parallèles ou sensiblement parallèles l'une par rapport à l'autre,
- des cellules, chaque cellule comprenant une première face et une deuxième face, les première et deuxième faces étant opposées et parallèles ou sensiblement parallèles l'une par rapport à l'autre, les cellules étant agencées au sein de l'enceinte, la première face de chaque cellule étant en face de la première paroi de l'enceinte et la deuxième face de chaque cellule étant en face de la deuxième paroi de l'enceinte,
- des premiers connecteurs destinés à connecter électriquement des cellules entre elles du côté de la première face et des deuxièmes connecteurs destinés à connecter électriquement des cellules entre elles du côté de la deuxième face,
- un matériau apte à passer d'une phase liquide à une phase vapeur et vice versa selon des conditions de température et/ou de pression, notamment un matériau diélectrique, le matériau occupant un volume disponible, notamment au-dessus et/ou autour des cellules,
- un condenseur, le condenseur étant agencé au sein de l'enceinte au-dessus des cellules,
- une première membrane hermétique renfermant un gaz, notamment de l'air, la première membrane s'étendant entre la première paroi de l'enceinte et les premières faces des cellules, les premiers connecteurs s'étendant en vis-à-vis de premières faces de cellules de sorte à ce que les premiers connecteurs viennent au contact de la première membrane.

L'enceinte peut comprendre un premier orifice ménagé à travers la première paroi de sorte à assurer une pression atmosphérique au niveau de la première membrane en vis-à-vis du premier orifice.

La première membrane peut comprendre un renfort destiné à renforcer la première membrane au moins en vis-à-vis du premier orifice.

Le renfort peut être venu de matière avec la première membrane, notamment en présentant une surépaisseur de matière, ou le renfort peut être un élément apposé sur la première membrane, notamment par collage, ou le renfort peut être surmoulé avec la première membrane.

Le module peut comprendre un moyen de maintien en position de la première membrane au sein de l'enceinte.

L'enceinte peut être parallélépipédique ou sensiblement parallélépipédique et peut comprendre un fond, une troisième paroi et une quatrième paroi, les troisième et quatrième parois pouvant être opposées et parallèles ou sensiblement parallèles l'une par rapport à l'autre, l'enceinte pouvant comprendre un couvercle destiné à fermer l'enceinte par le dessus, le moyen de maintien pouvant comprendre un cadre s'étendant contre, ou sensiblement contre, le fond et la troisième paroi et le couvercle et la quatrième paroi de sorte à éviter toute fuite du matériau au niveau du fond et au niveau de la troisième paroi et au niveau du couvercle et au niveau de la quatrième paroi.

Le module peut comprendre un joint, notamment un joint torique, agencé entre le couvercle et l'enceinte et/ou les premiers connecteurs et/ou les deuxièmes connecteurs.

Un moyen d'étanchéité, notamment un joint, ou un bord de la membrane peut s'étendre sur le pourtour du moyen de maintien en position de la première membrane.

Le module peut comprendre :
- une deuxième membrane pouvant s'étendre entre la deuxième paroi de l'enceinte et les deuxième faces des cellules,
- les deuxièmes connecteurs pouvant s'étendre en vis-à-vis de deuxièmes faces de cellules de sorte à ce que les deuxièmes connecteurs viennent au contact de la deuxième membrane,
- l'enceinte pouvant comprendre un deuxième orifice ménagé à travers la deuxième paroi de sorte à assurer une pression atmosphérique au niveau de la deuxième membrane en vis-à-vis du deuxième orifice.

L'invention porte encore sur une batterie comprenant au moins un module tel que défini précédemment.

L'invention porte encore sur un véhicule, notamment un véhicule automobile, comprenant une batterie telle que définie précédemment ou un module tel que défini précédemment.

L'invention porte encore sur un procédé d'assemblage d'un module tel que défini précédemment, le procédé comprenant :
- une étape de positionnement de la première membrane au sein de l'enceinte,
- une étape de positionnement de cellules au sein de l'enceinte précédée ou suivie d'une étape de fixation des premiers et deuxièmes connecteurs sur les cellules,
- une étape de positionnement du condenseur au-dessus des cellules,
- éventuellement suivie d'une étape d'augmentation de la pression au sein du premier orifice de sorte à pousser la membrane,
- une étape de remplissage du volume avec le matériau.

### Présentation des figures

Ces objets, caractéristiques et avantages de la présente invention seront exposés en détail dans la description suivante d'un mode de réalisation et d'un mode d'exécution d'un procédé d'assemblage, faite à titre non-limitatif en relation avec les figures jointes parmi lesquelles :
[Fig. 1] La figure 1 est une vue schématique d'un véhicule selon un mode de réalisation.
[Fig. 2] La figure 2 est une vue en coupe selon un plan vertical d'un module de batterie selon un mode de réalisation.
[Fig. 3] La figure 3 est une vue en coupe selon un plan horizontal du module de batterie selon le mode de réalisation.
[Fig. 4] La figure 4 est une vue de côté du module de batterie selon une variante du mode de réalisation.
[Fig. 5] La figure 5 est une vue schématique partielle en perspective du module de batterie selon le mode de réalisation.
[Fig. 6] La figure 6 est une autre vue schématique partielle en perspective du module de batterie selon le mode de réalisation en cours d'assemblage.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

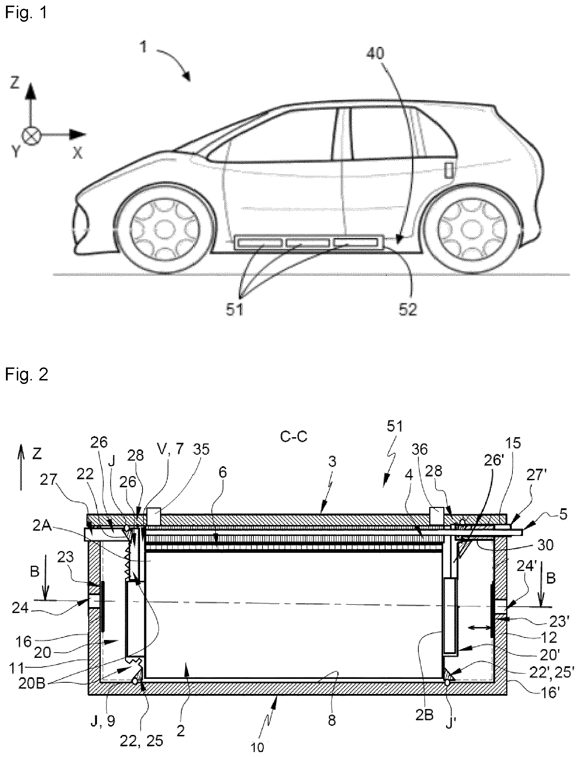

Comme illustré sur la figure 1, un véhicule, par exemple un véhicule automobile 1, comprend une batterie 52. Le véhicule ou la batterie 52 comprend au moins un module 51. De préférence la batterie 52 comprend plusieurs modules 51, par exemple agencés côte à côte, par exemple en étant en contact ou sensiblement en contact entre eux. Le véhicule comprend de préférence un plancher 40. La batterie est avantageusement disposée au niveau du plancher 40, notamment afin d'abaisser le centre de gravité du véhicule.

Plus précisément, comme illustré sur la figure 2, le module 51 comprend une enceinte 10. Par exemple, l'enceinte 10 est parallélépipédique ou sensiblement parallélépipédique. De préférence, l'enceinte comprend un fond 8.

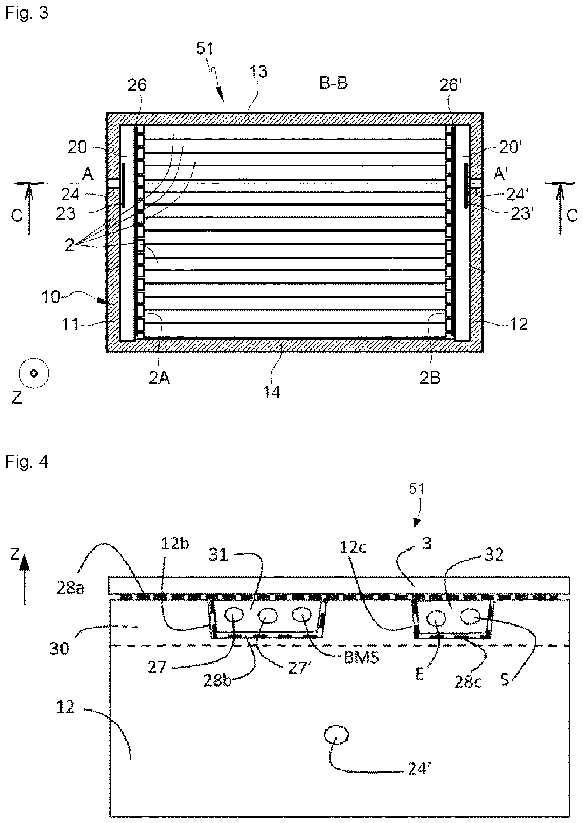

Comme illustré sur la figure 3, l'enceinte 10 comprend une première paroi 11 et une deuxième paroi 12. La première paroi 11 et la deuxième paroi 12 sont opposées et parallèles, ou sensiblement parallèles, l'une par rapport à l'autre.

Le module 51 comprend encore des cellules 2. Chaque cellule 2 comprend une première face 2A et une deuxième face 2B. La première face 2A et la deuxième face 2B sont opposées et parallèles, ou sensiblement parallèles, l'une par rapport à l'autre. Les cellules 2 sont disposées au sein de l'enceinte 10 de sorte que la première face 2A de chaque cellule 2 se trouve en face de la première paroi 11 de l'enceinte et de sorte que la deuxième face 2B de chaque cellule 2 se trouve en face de la deuxième paroi 12 de l'enceinte 10. Avantageusement, chaque cellule 2 est parallélépipédique. De préférence, toutes les cellules 2 ont des dimensions identiques ou sensiblement identiques et sont agencées côte à côte.

Le module 51 comprend encore des premiers connecteurs ou « busbars » 26. Les premiers connecteurs 26 sont destinés à connecter électriquement des cellules 2 entre elles du côté de leurs premières faces 2A. Le module 51 comprend encore des deuxièmes connecteurs ou « busbars » 26'. Les deuxièmes connecteurs 26' sont destinés à connecter électriquement des cellules 2 entre elles du côté de leurs deuxièmes faces 2B. Selon le besoin en tension de sortie de chaque module, les connecteurs 26, 26' permettent de connecter électriquement des cellules 2 entre elles en parallèle et/ou en série.

Comme illustré sur la figure 2, le module 51 comprend encore un matériau 7. Le matériau 7 est apte à passer d'une phase liquide à une phase vapeur et vice versa selon des conditions de température et/ou de pression. De préférence, le matériau 7 est diélectrique. Le matériau 7 occupe, remplit, un volume V disponible par exemple au-dessus et/ou autour des cellules 2. Alternativement, ou en complément, le volume V s'étend sous les cellules 2, c'est-à-dire entre le fond 8 et les cellules 2.

Comme illustré sur la figure 2, le module 51 comprend encore un condenseur 4. Le condenseur 4 est agencé au sein de l'enceinte 10, de préférence dans la partie supérieure de l'enceinte, par exemple au-dessus des cellules 2. De préférence, comme illustré sur la figure 2, un ou plusieurs conduits ou tuyaux 5 s'étendent depuis le condenseur 4 jusqu'à l'extérieur du module. De tels conduits 5 permettent la circulation d'un liquide, par exemple un liquide de refroidissement, par exemple contenant de l'eau.

Comme illustré sur les figures 2 et 3, le module 51 comprend encore une première membrane hermétique 20 renfermant un gaz. Par exemple, le gaz est de l'air. La première membrane 20 s'étend entre la première paroi 11 de l'enceinte 10 et les premières faces 2A des cellules 2. De préférence, les premiers connecteurs 26 s'étendent en vis-à-vis des premières faces 2A de sorte à ce que les premiers connecteurs 26, et éventuellement le reste des premières faces 2A des cellules n'étant pas en vis-à-vis des premiers connecteurs 26, viennent au contact ou sensiblement au contact de la première membrane 20.

Avantageusement, le module 51 comprend encore une deuxième membrane 20' s'étendant entre la deuxième paroi 12 de l'enceinte 10 et les deuxième faces 2B des cellules 2. De préférence, les deuxièmes connecteurs 26' s'étendent alors en vis-à-vis de deuxièmes faces 2B de cellules 2 de sorte à ce que les deuxièmes connecteurs 26', et éventuellement le reste des deuxièmes faces 2B des cellules n'étant pas en vis-à-vis des deuxièmes connecteurs 26', viennent au contact ou sensiblement au contact de la deuxième membrane 20'. A noter que le matériau 7 est de préférence en contact direct avec les connecteurs 26, 26' de sorte à assurer leur refroidissement.

La ou les membranes sont par exemple en silicone ou dans un matériau ayant des propriétés équivalentes.

L'enceinte 10 comprend de préférence un premier orifice ou trou ou perçage 24 ménagé à travers la première paroi 11. Ce premier orifice 24 est destiné à assurer une mise à la pression atmosphérique de la cavité formée entre la première paroi 11 et la première membrane 20. En cas de module 51 comprenant une deuxième membrane 20', l'enceinte 10 comprend de préférence un deuxième orifice ou trou ou perçage 24' ménagé à travers la deuxième paroi 12. Ce deuxième orifice est destiné à assurer une mise à la pression atmosphérique de la cavité formée entre la deuxième paroi 12 et la deuxième membrane 20'. Par exemple, le ou les trous ont une section circulaire, par exemple de quelques mm de diamètre. Alternativement, la mise à la pression atmosphérique au niveau de la première paroi 11 comprend plusieurs orifices, voire une grille, et/ou la mise à la pression atmosphérique au niveau de la deuxième paroi 12 comprend plusieurs orifices, voire une grille.

Comme illustré sur les figures 2 et 3, de préférence, la première membrane 20 comprend un renfort 23. Le renfort 23 est destiné à renforcer la première membrane 20, au moins en vis-à-vis du premier orifice 24.

Le renfort 23 est par exemple venu de matière avec la première membrane 20, par exemple en présentant une surépaisseur de matière. Alternativement, le renfort 23 est un élément apposé sur la première membrane 20, par exemple par collage. Alternativement encore, le renfort 23 est surmoulé avec la première membrane 20. En cas de pluralité d'orifices dans la paroi 11, le renfort 23 s'étend en vis-à-vis de tous ces orifices.

Comme illustré sur les figures 2 et 3, en cas de module 51 comprenant une deuxième membrane 20', la deuxième membrane comprend un renfort 23'. Le renfort 23' est destiné à renforcer la deuxième membrane 20', au moins en vis-à-vis du deuxième orifice 24'. Le renfort 23' est par exemple venu de matière avec la deuxième membrane 20', par exemple en présentant une surépaisseur de matière. Alternativement, le renfort 23' est un élément apposé sur la deuxième membrane 20', par exemple par collage. Alternativement encore, le renfort 23' est surmoulé avec la deuxième membrane 20'. En cas de pluralité d'orifices dans la paroi 12, le renfort 23' s'étend en vis-à-vis de tous ces orifices.

Par exemple, les renforts 23, 23' sont fabriqués en plastique ou dans un matériau ayant des propriétés similaires.

En cas d'enceinte 10 parallélépipédique ou sensiblement parallélépipédique, l'enceinte comprend une troisième paroi 13 et une quatrième paroi 14. La troisième paroi 13 et la quatrième paroi 14 sont opposées et parallèles, ou sensiblement parallèles, l'une par rapport à l'autre. De préférence, la première paroi 11 et la deuxième paroi 12 et la troisième paroi 13 et la quatrième paroi 14 et le fond 8 forment une sorte de boîte parallélépipédique ou sensiblement parallélépipédique ouverte sur le dessus (sans paroi supérieure). En effet, avantageusement, comme illustré sur les figures 2 et 4, l'enceinte 10 comprend un couvercle 3 amovible. Le couvercle 3 est destiné à être agencé sur le dessus de la boîte de sorte à fermer l'enceinte 10 par le dessus. De préférence, comme illustré sur la figure 2, le couvercle 3 comprend un orifice de remplissage fermé par un bouchon ou une vis de remplissage 35 et un orifice de purge fermé par un bouchon ou une vis de purge 35. Ceci facilite le remplissage en matériau 7 en permettant l'évacuation de l'air comme il sera expliqué par la suite.

Dans le cas d'une enceinte parallélépipédique illustrée sur les figures 2 à 6, la coupe C-C représentée sur la figure 2 est selon un plan parallèle ou sensiblement parallèle aux parois 13, 14 et passant par l'axe A du premier orifice 24 et par l'axe A' du deuxième orifice 24'. De préférence, ces parois sont verticales ou sensiblement verticales. Dans ce cas, la coupe B-B représentée sur la figure 3 est selon un plan parallèle ou sensiblement parallèle au fond 8 et au couvercle 3 et passant par l'axe A du premier orifice 24 et par l'axe A' du deuxième orifice 24'.

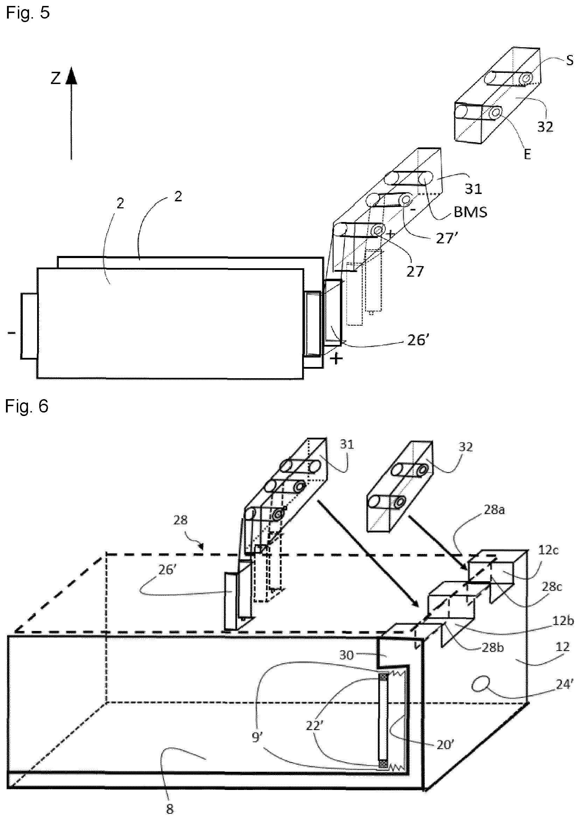

De préférence, comme illustré sur les figures 4 et 6, une surépaisseur 30 de la deuxième paroi 12 s'étend depuis le haut de la paroi 12, parallèlement au fond 8, en direction de l'intérieur du module. La surépaisseur 30, ou éventuellement une traverse accolée ou fixée ou maintenue en haut de la paroi 12, permet d'assurer la fixation de la membrane 20' et/ou d'assurer le maintien en position de blocs 31, 32 pour les connecteurs électriques et hydrauliques comme il sera expliqué par la suite. En outre, la surépaisseur 30 permet d'offrir une surface d'appui conséquente au couvercle 3 afin de faciliter l'étanchéité du haut du module à proximité de la paroi 12 comme il sera vu par la suite.

De préférence, le module 51 comprend encore des moyens de maintien 25, 25' en position des membranes 20, 20' au sein de l'enceinte 10. En cas d'enceinte en forme de boîte décrite ci-dessus, de préférence, les moyens de maintien comprennent chacun un cadre 22, 22'. Comme illustré sur la figure 6, le cadre 22' s'étend de préférence contre, ou sensiblement contre, le fond 8 et la troisième paroi 13 et la surépaisseur 30 et la quatrième paroi 14 (la paroi 14 n'est pas représentée pour faciliter la compréhension). Le cadre 22, 22' comprend par exemple une ou plusieurs traverses et/ou cornières et/ou tubes et/ou barres jointes les unes aux autres au niveau de leurs extrémités pour former le cadre. Par exemple le cadre 22' s'étend parallèlement à la deuxième paroi 12 avec des jeux faibles en vis-à-vis du fond 8 et en vis-à-vis de la troisième paroi 13 et en vis-à-vis de la surépaisseur 30 et en vis-à-vis de la quatrième paroi 14. Eventuellement, un moyen d'étanchéité J' (figure 2), par exemple un joint, par exemple un joint torique, s'étend sur le pourtour du cadre 22' de sorte à venir au contact de la surépaisseur 30, des troisièmes et quatrièmes parois 13, 14 et du fond 8. Par exemple une gorge de réception du moyen d'étanchéité est ménagée sur ces éléments venant au contact du joint. Une telle gorge permet notamment de faciliter le positionnement et/ou le maintien en position du moyen d'étanchéité.

De préférence, en cas de membrane réalisée avec un matériau souple, l'étanchéité est réalisée directement par la membrane, comme illustré sur la figure 6. Dans ce cas, un bord 9' de la membrane 20' assure l'étanchéité, éventuellement en renforçant le bord 9' de la membrane pour avoir une section ronde à la manière d'un joint torique. Par exemple, le cadre 22' pince le bord 9' de la membrane 20' de sorte à assurer l'étanchéité (empêcher le passage du matériau 7 vers la zone de réception de la membrane 20') et assurer le maintien en place de la membrane 20'.

Comme illustré sur la figure 2, le module 51 comprend de préférence un joint 28, par exemple un joint torique, agencé entre le couvercle 3 et l'enceinte 10. De préférence, le couvercle 3 comprend une gorge de réception du joint 28. Alternativement, ou en complément, une face supérieure 15 des parois verticales de l'enceinte comprend une gorge de réception du joint 28.

De préférence, notamment afin de faciliter l'étanchéité, chaque connecteur électriques 26, 26' comprend une pièce unique de conduction de courant électrique comme illustré schématiquement sur figures 5 et 6. De préférence, chaque connecteur comprend une extension 27, 27' ou borne ou connecteur extérieur au module. Avantageusement, comme illustré sur les figures 5 et 6, les parties extensions sont surmoulées. Par exemple, un bloc 31 de surmoulage comprend les connecteurs extérieurs 27, 27' et BMS (pour l'abréviation anglo-saxonne Battery Management System). Par exemple, de la même manière, les tuyaux 5 d'entrée E et sortie S sont également surmoulés par un bloc 32. De préférence, un moulage à chaud est donc réalisé sur les connecteurs et un autre moulage à chaud est réalisé sur les tuyaux de sorte à obtenir une étanchéité entre les connecteurs et le bloc 31 et entre les tuyaux et le bloc 32.

Eventuellement, une rainure (non illustrée) est ménagée sur chaque bloc 31, 32 pour faciliter la réception du joint 28. Comme illustré en pointillés épais sur les figures 4 et 6, le joint 28 comprend trois parties. La partie 28a est de préférence destinée à venir au contact des parois 11 et/ou 12, 13 et 14 et du couvercle 3. La partie 28b est destinée à entourer le bloc 31 et venir au contact d'une cavité 12b ménagée dans la paroi 12 et/ou la surépaisseur 30. La partie 28c est destinée à entourer le bloc 32 et venir au contact d'une cavité 12c ménagée dans la paroi 12 et/ou la surépaisseur 30. Eventuellement, une rainure est prévue sur la face supérieure 15 de l'enceinte au niveau des parois 11, 13, 14 et de la surépaisseur 30.

Grâce au fait que le joint 28 soit monobloc, la continuité de l'étanchéité entre le couvercle 3 et l'enceinte 10 et les blocs 31, 32 est assurée et fiable. Par exemple, les blocs 31, 32 ont une forme globale de parallélépipède. Alternativement, comme illustré sur la figure 4, les blocs ont une section selon un plan parallèle à la face extérieure 16' de la paroi 12 en forme de trapèze, le grand côté des deux côtés parallèles étant destiné à être en vis-à-vis du couvercle 3 (c'est-à-dire en haut). Une telle forme facilite l'insertion des blocs 31, 32 dans chaque cavité 12b, 12c sans déformer et/ou abîmer les parties 28b, 28c du joint 28. Evidemment, dans ce cas, les cavités 12b, 12c ont également une section selon un plan parallèle à la face 16' en forme de trapèze sensiblement correspondant.

Un mode d'exécution d'un procédé d'assemblage d'un module 51 va maintenant être décrit.

Avantageusement, on procède à une étape de positionnement de la membrane 20 dont le bord a la fonction de joint, et on met en place le moyen de maintien, par exemple de type cadre 22. Ainsi le cadre 22, et le cas échéant le joint J, se retrouve au contact ou sensiblement au contact des deux parois 13, 14 et du fond 8. A noter qu'en cas de deuxième membrane 20', on procède à une étape de positionnement de la membrane 20' dont le bord 9' a la fonction de joint et d'un cadre 22' sensiblement simultanément au positionnement du cadre 22. Ainsi le cadre 22', et le cas échéant le joint J', se retrouve au contact ou sensiblement au contact des deux parois 13, 14 et du fond 8 et de la surépaisseur 30.

On procède ensuite à une étape d'assemblage des cellules 2 en insérant notamment des feuilles de mousse de compression (non illustrées) entre les cellules, et en les mettant électriquement en parallèle et/ou en série par des connecteurs électriques de chaque cellule.

On procède à une étape de positionnement des cellules 2 assemblées au sein de l'enceinte 10. Pour rappel, avantageusement, l'enceinte 10 est parallélépipédique, ou sensiblement parallélépipédique, et comprend les quatre parois 11, 12, 13, 14 s'étendant verticalement ou sensiblement verticalement depuis les quatre côtés du fond 8 de préférence de forme rectangulaire. Ainsi, la première paroi 11 et la deuxième paroi 12 et la troisième paroi 13 et la quatrième paroi 14 et le fond 8 forme une boîte parallélépipédique ou sensiblement parallélépipédique ouverte sur le dessus. Dans cette étape de positionnement, on place les cellules 2 au sein de l'enceinte 10 de sorte que la première face 2A de chaque cellule 2 se trouve en face de la membrane 20 et de sorte que la deuxième face 2B de chaque cellule 2 se trouve en face de la deuxième membrane 20'.

Préalablement à cette étape de positionnement des cellules, ou suite à cette étape de positionnement des cellules, on procède à une étape de fixation des premiers et deuxièmes connecteurs 26, 26' sur les cellules 2. Par exemple, les premiers connecteurs 26 sont fixés de sorte à connecter électriquement des cellules 2 entre elles du côté de leur première face 2A. Par exemple, les deuxièmes connecteurs 26' sont fixés de sorte à connecter électriquement des cellules 2 entre elles du côté de leur deuxième face 2B. La fixation des connecteurs sur les cellules est par exemple assurée par boulonnage et/ou collage et/ou soudage et/ou brasage et/ou clipage.

Eventuellement, les membranes et/ou les moyens de maintien des membranes peuvent être disposés au sein de l'enceinte après implantation des cellules.

Eventuellement, on procède au placement d'une grille 6 au-dessus des cellules 2.

On procède ensuite à une étape de positionnement du condenseur 4 au-dessus des cellules 2, ou le cas échéant, au-dessus de la grille 6. Eventuellement, on procède à l'installation du ou des tuyaux 5. De préférence, les tuyaux 5 sont préalablement assemblés, fixés au condenseur 4 notamment avec le bloc 32, notamment à des ailettes du condenseur.

On ferme ensuite l'enceinte par fixation du couvercle 3, les bouchons 35, 36 étant enlevés.

De préférence, on procède à une étape d'augmentation de la pression au sein du premier orifice 24 au-delà de la pression atmosphérique. Il en résulte que la membrane 20 hermétique est poussée vers la première face 2A des cellules 2 et les connecteurs 26 (figure 3). Par exemple, à l'état initial en usine, en cas de membrane 20 agencée côté gauche, on plaque la membrane 20 vers le côté droit grâce à une pression via l'orifice 24. Alternativement, on ne procède pas à une augmentation de la pression dans la cavité formée entre la membrane 20 et la paroi 11. On utilise par exemple la forme naturelle de la membrane qui se trouve du côté de la première face 2A des cellules. Alternativement encore, on augmente légèrement la pression du fluide à changement de phase 7 lors de son remplissage qui va être décrit par la suite.

De préférence on place l'enceinte 10 sur un plan incliné de sorte que le remplissage en matériau 7, par le trou destiné à coopérer avec le bouchon de remplissage 35, engendre une évacuation de l'air présent dans l'enceinte par le trou destiné à coopérer avec le bouchon de purge 36. Eventuellement, on raccorde une durite pour l'arrivée du matériau et une durite pour l'évacuation de l'air. On procède ensuite à une étape de remplissage du volume V avec le matériau 7. De préférence, après avoir placé le module sur un plan horizontal, et éventuellement avoir retiré les durites, on remet en place les deux bouchons 35 et 36.

Alternativement, en cas d'absence de bouchons 35, 36, après avoir mis les cellules dans l'enceinte 10, on procède à une étape de remplissage du volume V avec le matériau 7, de préférence en plaçant l'enceinte 10 sur un plan de niveau. On remplit jusqu'à un niveau maximum prédéfini. En cas de pression appliquée au niveau du ou des orifices 24, 24' le volume V à remplir est restreint par rapport à une mise à la pression atmosphérique au niveau du ou des orifices 24, 24'. On procède ensuite à une étape de positionnement du condenseur 4 au-dessus des cellules 2, ou le cas échéant, au-dessus de la grille 6. Eventuellement, on procède à l'installation du ou des tuyaux 5. De préférence, les tuyaux 5 sont préalablement assemblés, fixés au condenseur 4, notamment avec le bloc 32, notamment à des ailettes du condenseur. Par exemple, lors de l'introduction du condenseur, on autorise un léger débordement du matériau avant de fermer le couvercle 3 de sorte à chasser l'air de l'enceinte.

Dans les deux modes de remplissage décrits, de préférence, l'étape de fermeture de l'enceinte 10 par placement du couvercle 3 comprend une sous étape de positionnement du joint 28 sur le couvercle 3, ou sur une face supérieure 15, notamment sur le dessus des parois 11, 13, 14 (partie 28a) au niveau de l'enceinte, et autour des blocs 31, 32 (parties 28b et 28c).

Lorsque que le véhicule est stationné dans un environnement dont la température dépasse la température d'ébullition du matériau 7 alors que le système de refroidissement est en arrêt, la température au sein du module atteint la température ambiante. Le matériau 7 s'évapore de sorte que la membrane 20 se déplace librement jusqu'à sa position maximale, à savoir contre la première paroi 11. Le volume maximal de la membrane 20 est alors atteint.

Il faut bien comprendre que la cavité formée entre la paroi 11 et la membrane 20 est en communication avec l'air libre par le trou 24. Lorsque le liquide s'évapore, le volume du fluide augmente et, tant que la membrane ne se déplace pas, le fluide diphasique monte en pression. Cette pression finit par pousser la membrane 20 vers le coté paroi 11 où la pression est atmosphérique. Comme la membrane 20 est souple et qu'il y a encore de la place du côté de la cavité d'air, la membrane se déplace naturellement vers le coté de la cavité d'air, où la pression est atmosphérique.

En cas de poursuite de l'évaporation, la quantité de vapeur produite est piégée dans le module si bien que la pression au sein du module augmente. En effet, l'orifice 24 est obturé par la présence de la membrane 20, plus précisément du renfort 23. La pression dans le module augmente jusqu'à une pression de saturation à la température ambiante. Par exemple, une pression de l'ordre de 2.5 bars absolus est atteinte au sein du module à une température ambiante de l'ordre de 60 degrés Celsius. Dans ce cas, un écart de pression de l'ordre de 1.5 bar s'applique sur l'aire de la membrane en vis-à-vis de l'orifice de mise à la pression 24. Le renfort 23 renforce la membrane 20 là où se crée cet écart de pression. Le renfort 23 évite ainsi la détérioration de la membrane, notamment l'usure ou l'abrasion voire le perçage de la membrane du fait de cet écart de pression entre l'intérieur du module et l'extérieur du module.

Grâce à la solution il devient possible d'utiliser un matériau 7 dont la température d'ébullition (changement de la phase liquide vers la phase vapeur) est de l'ordre de 30 à 40 degrés Celsius. Dans ce cas, le refroidissement des cellules 2 démarre par exemple à une température des cellules inférieure à 40 degrés Celsius. Cette température d'ébullition est bien inférieure à la température ambiante dans des conditions extrêmes qui peut atteindre par exemple 50 à 60 degrés Celsius. Le module 51 doté de la ou des membranes 20, 20' tolère des différences de pression au sein même de l'enceinte 10. En outre, le condenseur 4 est en partie haute du module, au-dessus des cellules, là où les vapeurs sont amenées à apparaître ou à se déplacer. Ainsi, lorsque le véhicule se trouve à une température de l'ordre de 50 degrés, l'évaporation du liquide 7 se produit. Les vapeurs produites demeurent au sein de l'enceinte, a fortiori à proximité du condenseur, ce qui permet de les condenser et diminuer la pression au sein de l'enceinte. Autrement dit, en cas de formation de vapeur lors du stationnement du véhicule dans un environnement chaud et prolongé, la vapeur se retrouve en contact direct avec le condenseur. A noter qu'un liquide à basse température peut circuler dans le condenseur après le démarrage du véhicule.

Avec la solution, en utilisant la déformation de la ou des membrane(s) intégrée(s) dans le module pour absorber la variation importante du volume V du matériau 7 (liquide et vapeur) de refroidissement, la pression demeure constante ou sensiblement constante dans le module pendant le fonctionnement. En cas de véhicule arrêté (contact coupé) et sans refroidissement actif alors qu'il se trouve dans un environnement très chaud (50 degrés à 60 degrés Celsius par exemple), la transformation partielle du matériau 7 en vapeur augmente la pression à l'intérieur du module jusqu'à l'ordre de 2.5 bars absolus. Au démarrage du véhicule, avec le système de refroidissement, la membrane intégrée permet de descendre rapidement la pression ainsi que la température du module. La batterie est alors rapidement en état de fonctionnement, la température des cellules s'abaissant à une température inférieure à 45 / 55 degrés Celsius par exemple.

Par exemple, lors du démarrage du véhicule, un liquide froid, par exemple de l'ordre de 20 à 25 degrés Celsius, est envoyé dans les conduites 5 de sorte à refroidir le condenseur 4 et faire condenser la vapeur au niveau du condenseur. La condensation de la vapeur fait baisser la pression dans le module, cette diminution de pression crée une évaporation du liquide dans le module qui peut rester à une température supérieure à la température de l'ébullition correspondant à la pression dans le module, l'évaporation prend la chaleur du module et des cellules, et diminue la température de cellules et du liquide dans le module.

En outre, la disposition des connecteurs 26, 26', associée à la forme parallélépipédique de chaque cellule et de l'enceinte 10, permet de réduire le volume V à remplir par le matériau 7. De préférence, les premiers connecteurs 26 s'étendent parallèlement aux faces 2A des cellules avec un jeu faible par rapport aux faces 2A. De préférence, les deuxièmes connecteurs 26' s'étendent parallèlement aux faces 2B des cellules avec un jeu faible par rapport aux faces 2B. Pour rappel, la membrane 20 est au contact ou sensiblement au contact des premiers connecteurs 26 et la membrane 20' est au contact ou sensiblement au contact des deuxièmes connecteurs 26'. Ainsi peu d'espace réside entre les membranes et les cellules au sein de l'enceinte 10. Pour rappel, de préférence les cellules sont parallélépipédiques et agencées côte à côte de sorte à laisser peu, voire pas, de jeu entre elles. De la même manière, peu de jeu, voire un jeu nul ou sensiblement nul, est prévu entre une cellule longeant la troisième paroi 13 et cette troisième paroi 13. De la même manière peu de jeu, voire un jeu nul ou sensiblement nul, est prévu entre une cellule longeant la quatrième paroi 14 et cette quatrième paroi 14. Il en résulte une capacité de stockage de liquide 7 particulièrement faible. Le matériau 7 étant onéreux et ayant une forte densité, il en résulte une économie et un gain de masse pour chaque module, et par conséquent pour la batterie utilisant un ou plusieurs modules de ce type.

En outre, la présence des renforts 23, 23' permettent de maintenir localement la différence de pression entre la pression au sein du module (au niveau du liquide diélectrique 7) et la pression ambiante (à l'extérieur du module). Autrement dit les renforts 23, 23' renforcent la tenue mécanique de la membrane. Par exemple, les premiers renforts permettent de contenir une différence de pression comprise entre 3 bars et 6 bars.

En résumé, la solution permet de réguler la pression au sein de l'enceinte 10 dans laquelle sont immergées les cellules 2 de la batterie électrique 52. Le condenseur 4 comprenant de préférence des ailettes et les tubes ou tuyaux 5 se trouve juste au-dessus des cellules 2 à refroidir. De préférence, une grille 6 est intercalée entre la face supérieure des cellules et le bas des ailettes du condenseur. Les vapeurs créées à l'interface entre les cellules 2 et le liquide diélectrique 7 se retrouvent immédiatement en contact avec les ailettes du condenseur.

A noter que l'enceinte est divisée en deux zones en cas d'une seule membrane (une zone pour les cellules et une zone pour la déformation de la membrane) et en trois zones en cas de deux membranes (une zone pour les cellules et deux zones de part d'autre des cellules pour la déformation de chaque membrane) - mode de réalisation illustré. Ainsi, les cellules et le condenseur sont agencées dans la zone centrale. Comme évoqué précédemment, chaque membrane est de préférence maintenue, voire fixée, au sein de l'enceinte. La présence du joint 28 entre le couvercle et une surépaisseur 30 ou traverse supérieure, et/ou un cadre 22 par exemple, assure l'étanchéité. Le même principe de fixation et d'étanchéité est réalisé au niveau des faces supérieures des parois 13, 14. Ainsi, les zones recevant les membranes sont étanches au niveau du couvercle 3 par rapport à la zone principale centrale destinée aux cellules.

Comme évoqué, les connecteurs ou connexions électriques entre cellules sont prévues sur chaque côté du module. Ces connecteurs 26, 26' réalisent la mise en parallèle, ou en série, des cellules. Par exemple, les connecteurs sont agencés, montés, de manière à s'étendre verticalement. De préférence, une extension ou borne 27, 27' s'étend horizontalement depuis un connecteur ou une pluralité de connecteur 26, 26' de sorte à s'étendre à l'extérieur de l'enceinte 10. Par exemple, l'extension 27 traverse l'enceinte au niveau de la première paroi 11 et l'extension 27' traverse l'enceinte au niveau de la deuxième paroi 12 (figure 2).

Selon une variante du mode de réalisation, l'extension 27 reliée aux premiers connecteurs 26 et l'extension 27' reliée aux deuxièmes connecteurs 26' s'étendent en dehors de l'enceinte du module du même côté, à l'extérieur de la deuxième paroi 12, comme illustré sur la figure 4. Alternativement, l'extension 27 reliée aux premiers connecteurs 26 et l'extension 27' reliée aux deuxièmes connecteurs 26' s'étendent en dehors de l'enceinte du module à l'extérieur de la première paroi 11 (non illustré).

Par exemple, l'extension 27 est une borne positive et l'extension 27' est une borne négative, ou inversement. Une borne de pilotage de batterie appelé BMS pour l'abréviation anglo-saxonne Battery Management System est de préférence prévue à côté des bornes 27, 27', ou à proximité de l'une de ces bornes par exemple. Une telle disposition des bornes positive, négative, et éventuellement de celle de contrôle sur une même face latérale extérieure 16, 16' facilite l'implantation de plusieurs modules 51 au sein d'une batterie, en particulier en facilitant leurs connexions électriques. En outre, avantageusement, comme illustré sur la figure 4, une entrée E et une sortie S du conduit 5 de liquide de refroidissement au sein ou au niveau du condenseur 4 est prévu sur cette même face 16'. De préférence, les connexions hydrauliques pour les conduites d'eau 5 et les sorties ou bornes de courant électrique 27, 27' sont agencées en haut du module (à proximité du couvercle 3) et décalées entre eux comme illustré sur la figure 4. Ainsi, le cas échant, le bloc 31 n'est pas en contact avec le bloc 32, comme illustré sur la figure 4. Ceci facilite là encore l'implantation de plusieurs modules 51 au sein de la batterie 52. Par exemple, les extensions 27, 27' sortent du module et sont connectées entre elles de sorte à former un réseau de haute tension, par exemple comprise entre 300 V et 800 V.

En résumé, l'agencement interne du module permet une meilleure exploitation des espaces autour des cellules. Il permet également d'offrir une cavité de réception et de déformation de la membrane ayant un volume conséquent, et étant régulière. Par « régulière », on entend que la cavité ou zone de réception d'une membrane est de préférence exempte d'arête vive ou saillie au niveau de sa surface de contact de type connecteurs et/ou cellules et/ou moyen de maintien et/ou fond et/ou couvercle et/ou parois de sorte à limiter au maximum les conformations de nature à user la membrane. De préférence, les connecteurs et leurs extensions sont lisses de sorte que le ou les contacts éventuels de la membrane avec les connecteurs et/ou les extensions se font sur des parois lisses. On évite ainsi tout dommage mécanique, de type frottement, notamment lorsque la pression à l'intérieur du module augmente en arrêt parking du véhicule à température ambiante élevée et sans refroidissement actif des cellules.

A noter que le premier orifice 24 est par exemple centré au sein de la face latérale 16. Dans ce cas le renfort 23 est positionné au niveau de la membrane de sorte à se retrouver face à l'orifice. Alternativement, le premier orifice peut être ménagé non centré, le renfort étant alors positionné sur la membrane de sorte à se retrouver face au premier orifice. De préférence, le renfort 23 de la membrane a une surface bien supérieure à la surface de la section de l'orifice 24 de sorte à couvrir largement la surface de cet orifice. Avantageusement, l'orifice 24 est chanfreiné, par exemple en étant arrondi, du côté intérieur de l'enceinte 10. Ainsi, la membrane ne sera pas percée au niveau de l'orifice même avec une différence de pression de 1,5 bars. Alternativement, en cas de multiples trous de petite section, ou d'une grille apposée devant un unique orifice 24, la membrane 20 peut être dépourvue de renfort.

De la même manière, le deuxième orifice 24' est par exemple centré au sein d'une face latérale 16'. Dans ce cas le renfort 23' est positionné au niveau de la membrane 20' de sorte à se retrouver face à l'orifice 24'. Alternativement, le deuxième orifice 24' peut être ménagé non centré, le renfort 23' étant alors positionné sur la deuxième membrane 20' de sorte à se retrouver face au deuxième orifice 24'. De préférence, le renfort 23' de la membrane a une surface bien supérieure à la surface de la section de l'orifice 24' de sorte à couvrir largement la surface de cet orifice. Avantageusement, l'orifice 24' est chanfreiné, par exemple en étant arrondi, du côté intérieur de l'enceinte 10. Ainsi, la membrane ne sera pas percée au niveau de l'orifice même avec une différence de pression de 1,5 bars. Alternativement, en cas de multiples trous de petite section, ou d'une grille apposée devant un unique orifice 24', la membrane 20' peut être dépourvue de renfort.

En cas de température ambiante élevée, par exemple aux alentours de 50 degrés, le liquide se dilate avec l'augmentation de la température, la membrane 20 (en pointillés) se déforme et/ou se déplace vers la gauche (voir partie gauche de la figure 2 - référence 20B illustrant les déformations). Lorsque l'ébullition du liquide 7 se développe, la vapeur monte vers le haut et entre en contact avec le condenseur 4. La vapeur se condense au contact du condenseur et le liquide issu de la condensation descend. Ainsi, le refroidissement fonctionne de manière passive, sans aide extérieure, ni nécessité de pompe. Par exemple, la pression à l'intérieur de l'enceinte demeure proche d'un bar absolu.

Pendant un arrêt prolongé du véhicule dans une ambiance chaude, le liquide peut s'évaporer et la pression augmenter dans le module. Pour rappel, la membrane de droite 20' (deuxième membrane) se déplace vers la deuxième paroi 12 (agencée à droite sur les figures 2 et 3) et la membrane de gauche 20 (première membrane) se déplace vers la première paroi 11 (agencée à gauche sur les figures 2 et 3). Le trou 24 est alors obstrué par la membrane 20 plaquée vers la paroi 11, en particulier au niveau du renfort 23, et le trou 24' est obstrué par la membrane 20' plaquée vers la paroi 12, en particulier au niveau du renfort 23'. Au fur et à mesure du temps d'arrêt du véhicule, les membranes se déforment pour atteindre le volume maximal possible pour le fluide contenu dans le module. Ainsi, la pression augmente jusqu'à un équilibre atteint lorsque la température de tout le module est égale à la température ambiante. Pour une température de 60 degrés Celsius, la pression peut atteindre par exemple jusqu'à 2.5 bars absolus au sein du module. Les renforts 23, 23' permettent aux membranes de supporter localement, au niveau des orifices 24, 24', la différence de pression entre le fluide 7 dans le module, c'est-à-dire la pression interne de l'enceinte, et l'air ambiant. En cas de démarrage du véhicule, on active la circulation de l'eau de refroidissement dans le conduit 5 ce qui favorise la condensation de la vapeur en contact avec les ailettes du condenseur 4 et réduit la pression interne de l'enceinte. On peut ainsi refroidir la totalité de la vapeur dans le module ce qui transforme l'intégralité de la vapeur du matériau 7 en liquide de sorte que le module reprend son état à froid en ne contenant que du matériau 7 à l'état liquide. Le dégazage du volume variable se fait naturellement. Le module est autonome et peut fonctionner dans toutes les conditions thermiques, même après un stationnement du véhicule dans des conditions chaudes, contact coupé. A froid, l'absence de pression contre les membranes déplaque les membranes depuis les parois 11, 12 et permet l'entrée d'air par les trous 24, 24' et par conséquent un équilibre de pression à la pression atmosphérique.

La solution ne nécessite pas de vase à volume variable dans une zone froide du module, ni de trouver un moyen de le refroidir. La solution exploite les volumes dits « morts » du module (non occupés par les cellules notamment) pour créer un ou des volumes variables, à savoir les moyens de comblement de type membrane. De préférence, les connecteurs 26, 26' s'étendent verticalement parallèlement aux faces 2A, 2B des cellules. De préférence, les extensions ou bornes 27, 27' (connectées aux connecteurs) s'étendent parallèlement à un plan comprenant les directions longitudinale et transversale (plan horizontal) lorsque le module 51 a son fond 8 posé sur un plan horizontal. Ainsi, bien que les connecteurs 26, 26' et au moins une partie des extensions 27, 27' se trouvent au sein de l'enceinte 10, ils occupent un encombrement faible au sein de l'enceinte. Par exemple, la partie de l'extension au sein de l'enceinte est en contact ou sensiblement en contact avec la membrane adjacente le cas échéant. Cela permet de libérer de l'espace et d'obtenir un volume de dilation ou gonflement de la membrane important tout en réduisant le volume de liquide 7. Par exemple, un jeu est prévu entre les connecteurs 26 et les faces 2A des cellules et entre les connecteurs 26' et les faces 2B des cellules de sorte à ce que les espaces créés par ces jeux fassent partie du volume V recevant le liquide 7. Ainsi, les faces 2A, 2B et les busbars sont intégralement refroidies par le liquide.

Par exemple, les connecteurs 26, 26' sont en forme de plaque ou sensiblement en forme de plaque, c'est-à-dire ayant deux dimensions largement supérieures à la troisième dimension. Par exemple, les extensions 27, 27' sont en forme de plaque ou sensiblement en forme de plaque. De préférence, les extensions 27, 27' s'étendent à proximité du couvercle 3, par exemple juste en-dessous du couvercle 3 et les connecteurs s'étendent en partie haute ou médiane selon la hauteur de l'enceinte. Alternativement, les connecteurs s'étendent dans la partie inférieure, à proximité du fond 8 de l'enceinte de sorte à simplifier l'architecture interne du module.

Bien que cela ne soit pas illustré, selon un mode de réalisation, une seule membrane est agencée côté droit ou côté gauche de l'enceinte de sorte à réaliser un volume de dilatation du liquide sur un seul côté des cellules.

La solution est particulièrement adaptée pour un module de batterie de véhicule électrique ou hybride ou encore comprenant un moteur thermique équipé d'une batterie, notamment de tension de l'ordre de 48 V. Alternativement, la solution peut être utilisée dans une batterie destinée à être stationnaire ou au sein d'une centrale de production d'électricité.

Le cadre 22, éventuellement associé au moyen d'étanchéité J, limite, voire évite, une fuite du matériau 7 au niveau du fond 8 et/ou au niveau de la troisième paroi 13 et/ou au niveau du couvercle 3 et/ou au niveau de la quatrième paroi 14 en direction de la première paroi 11. Le cadre 22', éventuellement associé au moyen d'étanchéité J', limite, voire évite, une fuite du matériau 7 au niveau du fond 8 et/ou au niveau de la troisième paroi 13 et/ou au niveau du couvercle 3 et/ou au niveau de la quatrième paroi 14 en direction de la deuxième paroi 12.

La solution permet d'une part de réduire le volume du liquide 7 à l'intérieur du pack et d'autre part d'augmenter la compacité du module 51. Cette compacité du module permet de réduire l'encombrement de la batterie et/ou d'augmenter le nombre de modules composant une batterie ayant un encombrement donné et/ou d'augmenter les performances de la batterie pour un encombrement donné.

En remarque, la solution selon l'invention atteint donc l'objectif recherché de diminuer l'encombrement d'un module d'une batterie, et présente les avantages suivants :
- elle est économique ;
- elle est facile à mettre en oeuvre ;
- elle peut être appliquée dans d'autres véhicules utilisant une batterie de stockage d'électricité, tels que des véhicules agricoles, engins de chantiers, ou encore des véhicules à deux roues, trois roues ou de type quad.

## Revendications

1. Module (51) pour une batterie (52), le module (51) comprenant :
- une enceinte (10), l'enceinte (10) comprenant une première paroi (11) et une deuxième paroi (12), les première et deuxième parois (11, 12) étant opposées et parallèles ou sensiblement parallèles l'une par rapport à l'autre,
- des cellules (2), chaque cellule (2) comprenant une première face (2A) et une deuxième face (2B), les première et deuxième faces (2A, 2B) étant opposées et parallèles ou sensiblement parallèles l'une par rapport à l'autre, les cellules (2) étant agencées au sein de l'enceinte (10), la première face (2A) de chaque cellule (2) étant en face de la première paroi (11) de l'enceinte (10) et la deuxième face (2B) de chaque cellule (2) étant en face de la deuxième paroi (12) de l'enceinte (10),
- des premiers connecteurs (26) destinés à connecter électriquement des cellules (2) entre elles du côté de la première face (2A) et des deuxièmes connecteurs (26') destinés à connecter électriquement des cellules (2) entre elles du côté de la deuxième face (2B),
- un matériau (7) apte à passer d'une phase liquide à une phase vapeur et vice versa selon des conditions de température et/ou de pression, notamment un matériau (7) diélectrique, le matériau (7) occupant un volume (V) disponible, notamment au-dessus et/ou autour des cellules (2),
- un condenseur (4), le condenseur (4) étant agencé au sein de l'enceinte (10) au-dessus des cellules (2),
- une première membrane hermétique (20) renfermant un gaz, notamment de l'air, la première membrane (20) s'étendant entre la première paroi (11) de l'enceinte (10) et les premières faces (2A) des cellules (2), les premiers connecteurs (26) s'étendant en vis-à-vis de premières faces (2A) de cellules (2) de sorte à ce que les premiers connecteurs (26) viennent au contact de la première membrane (20).

2. Module (51) selon la revendication précédente, **caractérisé en ce que** l'enceinte (10) comprend un premier orifice (24) ménagé à travers la première paroi (11) de sorte à assurer une pression atmosphérique au niveau de la première membrane (20) en vis-à-vis du premier orifice (24).

3. Module (51) selon la revendication précédente, **caractérisé en ce que** la première membrane (20) comprend un renfort (23) destiné à renforcer la première membrane (20) au moins en vis-à-vis du premier orifice (24).

4. Module (51) selon la revendication précédente, **caractérisé en ce que** le renfort (23) est venu de matière avec la première membrane (20), notamment en présentant une surépaisseur de matière, ou **en ce que** le renfort (23) est un élément apposé sur la première membrane (20), notamment par collage, ou **en ce que** le renfort (23) est surmoulé avec la première membrane (20).

5. Module (51) selon l'une des revendications précédentes, **caractérisé en ce qu'**il comprend un moyen de maintien (25) en position de la première membrane (20) au sein de l'enceinte (10).

6. Module (51) selon la revendication précédente, **caractérisé en ce que** l'enceinte (10) est parallélépipédique ou sensiblement parallélépipédique et comprend un fond (8), une troisième paroi (13) et une quatrième paroi (14), les troisième et quatrième parois (13, 14) étant opposées et parallèles ou sensiblement parallèles l'une par rapport à l'autre, l'enceinte (10) comprenant un couvercle (3) destiné à fermer l'enceinte (10) par le dessus, le moyen de maintien (25) comprenant un cadre (22) s'étendant contre, ou sensiblement contre, le fond (8) et la troisième paroi (13) et le couvercle (3) et la quatrième paroi (14) de sorte à éviter toute fuite du matériau (7) au niveau du fond (8) et au niveau de la troisième paroi (13) et au niveau du couvercle (3) et au niveau de la quatrième paroi (14).

7. Module (51) selon la revendication précédente, **caractérisé en ce que** le module (51) comprend un joint (28), notamment un joint torique, agencé entre le couvercle (3) et l'enceinte (10) et/ou les premiers connecteurs (26) et/ou les deuxièmes connecteurs (26').

8. Module (51) selon l'une des revendications 5 à 7, **caractérisé en ce qu'**un moyen d'étanchéité (J), notamment un joint, ou un bord (9) de la membrane (20) s'étend sur le pourtour du moyen de maintien (25) en position de la première membrane (20).

9. Module (51) selon l'une des revendications précédentes, **caractérisé en ce que** le module (51) comprend :
- une deuxième membrane (20') s'étendant entre la deuxième paroi (12) de l'enceinte (10) et les deuxième faces (2B) des cellules (2),
- les deuxièmes connecteurs (26') s'étendant en vis-à-vis de deuxièmes faces (2B) de cellules (2) de sorte à ce que les deuxièmes connecteurs (26') viennent au contact de la deuxième membrane (20'),
- l'enceinte (10) comprenant un deuxième orifice (24') ménagé à travers la deuxième paroi (12) de sorte à assurer une pression atmosphérique au niveau de la deuxième membrane (20') en vis-à-vis du deuxième orifice (24').

10. Batterie (52), **caractérisée en ce qu'**elle comprend au moins un module (51) selon l'une des revendications précédentes.

11. Véhicule, notamment véhicule automobile (1), **caractérisé en ce qu'**il comprend une batterie (52) selon la revendication précédente, ou un module (51) selon l'une des revendications 1 à 9.

12. Procédé d'assemblage d'un module (51) selon l'une des revendications 2 à 8, **caractérisé en ce qu'**il comprend :
- une étape de positionnement de la première membrane (20) au sein de l'enceinte (10),
- une étape de positionnement de cellules (2) au sein de l'enceinte (10) précédée ou suivie d'une étape de fixation des premiers et deuxièmes connecteurs (26, 26') sur les cellules (2),
- une étape de positionnement du condenseur (4) au-dessus des cellules (2),
- éventuellement suivie d'une étape d'augmentation de la pression au sein du premier orifice (24) de sorte à pousser la membrane (20),
- une étape de remplissage du volume (V) avec le matériau (7).
